# EUROPÄISCHE PATENTANMELDUNG

(11) **EP 0 643 018 A2**
(43) Veröffentlichungstag der Anmeldung: **15.03.1995**
(21) Anmeldenummer: 94114352.1
(22) Anmeldetag: 13.09.1994
(51) Int. Cl.: C02F 3/12, C02F 3/10, C02F 3/30, C02F 3/22

(54) **Verfahren und Vorrichtung zum Klären von Abwässern nach dem aerob/fakultativen Prinzip**

(30) Priorität: 15.09.1993 DE 9313940 U
(71) Anmelder: Zimmer, Erich Helmut, Dipl.-Ing., D-67061 Ludwigshafen (DE)
(72) Erfinder: Zimmer, Erich Helmut, Dipl.-Ing., D-67061 Ludwigshafen (DE)
(74) Vertreter: Patentanwälte Möll und Bitterich

(57) **Zusammenfassung**

Zum Klären von Abwässern nach dem aerob/fakultativen Prinzip wird das zu reinigende Abwasser in den Behälter (1.0) eines Klärreaktors (1) gefüllt. Anschließend wird im Behälter (1.0) während einer ersten Zeitspanne eine Kreisströmung erzeugt. Hierzu wird mit Hilfe einer Pumpe (2.0) das Abwasser aus einer Abzugskammer (1.6) unter dem Boden (1.1) des Behälters (1.0) abgesaugt und über Rohrleitungen (2.1, 2.2, 2.4) zu einer Wasserstrahlgaspumpe (2.6) gefördert, wo über eine Gasleitung (3) Gas, insbesondere Luft, feinst verteilt zugemischt wird. Das Abwasser-Gas-Gemisch wird durch weitere Rohrleitungen (2.7) unter den Boden (1.1) des Behälters (1.0) geleitet und durch ein Mündungsrohr (2.12) in den Behälter (1.0) gedrückt. Oberhalb des Mündungsrohrs (2.12) ist im Behälter ein als Tauchrohr ausgebildetes Strahlrohr (1.2) gelagert. Durch die so gebildete Mammutpumpe werden Abwasser, Klärschlamm und - falls vorhanden - Aufwuchskörper (4) für sessile Mikroorganismen in eine intensive Kreislaufströmung versetzt. Ein Sensor (5.1) mißt die Sauerstoffsättigung des Abwassers und steuert über eine Steuereinheit (5.0) die Drehzahl der Pumpe (2.0).

## Beschreibung

Die Erfindung betrifft Klärverfahren und Klärreaktoren nach dem aerob/fakultativen Prinzip gemäß dem Oberbegriff des Anspruchs 1 bzw. des Anspruchs 2.

Aus der DE-U 90 07 600 ist eine Kläranlage bekannt, bestehend aus einem biologischen Klärreaktor nach dem aerob/fakultativ/anaeroben Prinzip mit einem Zulauf für die zu reinigende Flüssigkeit, mit Füllkörpern als Aufwuchsfläche für sessile Mikroorganismen und mit einem Ablauf für die gereinigte Flüssigkeit. Dem Klärreaktor ist ein Nachklärbecken nachgeschaltet. Der gegen Wärmeverluste isolierte Klärreaktor besitzt einen trichterförmigen Boden und konzentrisch zur Reaktorwand zwei innere Tauchrohre. Unterhalb der Tauchrohre ist eine Belüftungseinrichtung positioniert, gebildet durch eine Flüssigkeitspumpe, eine Wasserstrahlgaspumpe mit Venturi-Rohr und eine Gaszuleitung. Die Flüssigkeitspumpe saugt Flüssigkeit und Schlamm an und fordert beide zusammen mit dem in der Wasserstrahlgaspumpe hinzugemischten Gas und mit einem Teil der Füllkörper durch das zentrale Tauchrohr nach oben, so daß im Klärreaktor eine Kreisströmung entsteht. Um ein Eindringen der Füllkörper in die Flüssigkeitspumpe zu verhindern, ist der den Füllkörpern zur Verfügung stehende Reaktorbereich durch einen nur für Flüssigkeit und Schlamm durchlässigen Rost nach unten begrenzt.

Praktische Versuche haben gezeigt, daß die bekannte Kläranlage eine hervorragende Abbauleistung besitzt, bedingt durch die feinste Vermischung von Abwasser und Gas in der Wasserstrahlgaspumpe. Da diese Kläranlage aber wie alle Großanlagen kontinuierlich mit zu reinigender Flüssigkeit beschickt wird, gelangt unvermeidbar eine bestimmter Prozentsatz an wenig oder nicht gereinigter Flüssigkeit in den Reinwasser-Ablauf. Die effektive Klärwirkung ist daher geringer als theoretisch möglich.

Während die bekannte Kläranlage für kommunale Anlagen sowie für Groß- und Mittelbetriebe durchaus geeignet ist, ist sie für Kleinbetriebe viel zu aufwendig und damit zu teuer. Um auch solchen Betrieben, typische Beispiele sind Weinbaubetriebe und Weinkellereien aber auch Brauereien, Fruchtsaftbarsteller, Gemüse-verarbeitende Betriebe usw., die Vorteile dieser Klärtechnologie zugute kommen zu lassen, bestand die Aufgabe, ein Klärverfahren zu entwickeln, das in einem Klärreaktor abläuft, der wenig Platz benötigt, bezahlbar ist und einen möglichst hundertprozentigen Abbau von organischen Stoffen im Abwasser ermöglicht, und zwar insbesondere, wenn Chargen mit hohen Belastungen anfallen und wenn die Schmutzfracht sehr einseitig ist.

Diese Aufgabe wird gelöst durch ein Klärverfahren mit den Merkmalen des Anspruchs 1 bzw. durch einen Klärreaktor mit den Merkmalen des Anspruchs 2.

Dank der Erfindung ist es möglich geworden, die komplette Abwasserreinigung in einam einzigen Behälter vorzunehmen, indem zeitlich nacheinander zuerst die organischen Schmutzstoffe mit Hilfe von Bakterien abgebaut und anschließend Reinwasser und Klärschlamm getrennt werden. Dank der Anordnung dar Wasserstrahlgaspumpe in Höhe des Abwasserspiegels im Behälter bleibt ihr Wirkungsgrad unabhängig von der Höhe des Wasserspiegels im Behälter. Bei der vorbekannten Kläranlage dagegen war die Höhe dar Flüssigkeit im Behälter auf ca. 2 bis max. 3 Meter begrenzt. Durch Erzeugen eines Unterdrucks im Klärreaktor konnte die Höhe auf ca. 5 Meter gesteigert werden, vorausgesetzt der Reaktor war vakuumdicht und eine ausreichend leistungsfähige Vakuumpumpe stand zur Verfügung. In dar Praxis war der bekannte Klärreaktor nur mit geringer Flüssigkeitshöhe und mit entsprechend großer Grundfläche bzw. relativ geringem Volumen zu realisieren.

Da je nach der organischen Belastung des zu klärenden Abwassers mehr oder weniger Klärschlamm entsteht, verschiebt sich in der Praxis die Trennfläche zwischen gereinigtem Wasser oben und Klärschlamm unten. Entsprechend dieser Erkenntnis sind vorteilhafterweise wenigstens zwei Abläufe für geklärtes Wasser vorgesehen, der eine etwa in der Höhe von einem Drittel, der andere etwa in der Höhe von zwei Dritteln der Behälterhöhe. Es versteht sich, daß bei Bedarf auch weitere höhenversetzte Abläufe vorgesehen sein können.

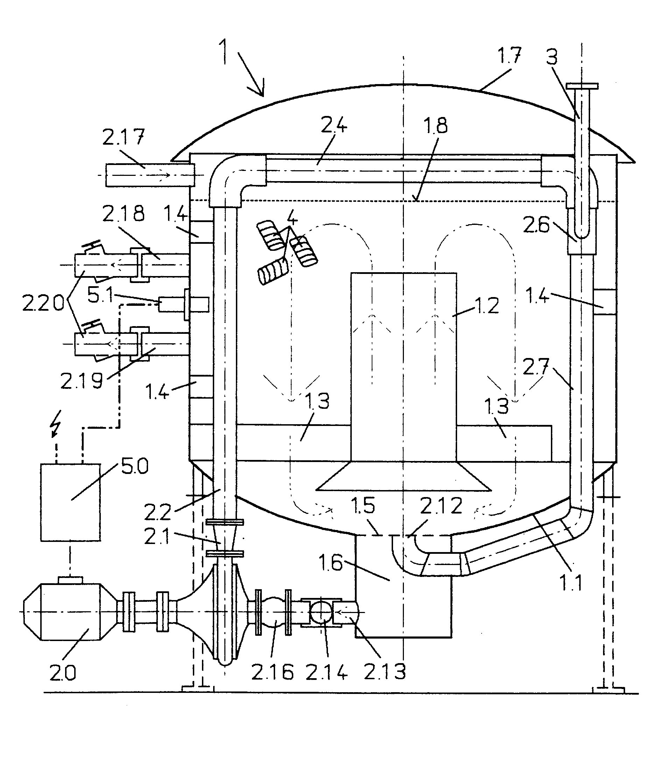

Die Erfindung, ihre Vorteile und ihre Weiterbildungen, wie sie in den Unteransprüchen definiert sind, sollen anhand der Zeichnung in Form eines Ausführungsbeispiels erläutert werden.

Man erkennt im Längsschnitt einen zylindrischen Behälter 1.0 mit einem trichterförmigen Boden 1.1, in dessen Zentrum ein als Tauchrohr ausgebildetes zylindrisches Strahlrohr 1.2 mit Hilfe von radialen Streben 1.3 montiert ist. Unterhalb des Tauchrohrs 1.2 ist der Boden 1.1 teilweise als Sieb 1.5 ausgebildet. Darunter erkennt man einen Sammel- und Abzugschacht 1.6 für Abwasser und Schlamm.

Werden Füllkörper 4 verwendet, die im Abwasser frei zirkulieren, so können diese dank des Siebbodens 1.5, dessen Maschenweite kleiner ist als die Füllkörpergröße, nicht in den Sammel- und Abzugsschacht 1.6 gelangen.

Der Behälter 1.0 ist durch einen gegebenefalls abnehmbaren Deckel 1.7 abgedeckt. Eine in der Praxis vorgesehene Wärmeisolierung ist in der Zeichnung nicht dargestellt.

An der linken Behälterseite erkennt man zunächst ganz oben einen Zulauf 2.17 für zu klärendes Abwasser. Darunter befinden sich in der Höhe von etwa einem Drittel bzw. zwei Dritteln der Behälterhöhe zwei Abläufe 2.18, 2.19, mit Hilfe von Ventilen 20.20 absperrbar. Die Abläufe 2.18, 2.19 ermöglichen das Ableiten des geklärten Wassers, nachdem sich der Klärschlamm abgesetzt hat. Dies wird im einzelnen noch weiter unten beschrieben.

Von der Sammel- und Abzugkammer 1.6 führt eine Rohrleitung 2.13 zunächst zu einem Ablauf 2.14 für Klärschlamm und weiter durch eine Beruhigungskammer 2.16 zu einer Flüssigkeitspumpe 2.0, hier als Kreiselpumpe dargestellt. Von der Druckseite der Pumpe 2.0 führen Rohrleitungen 2.1, 2.2, 2.4 in und durch den Behälter 1.0 bis oberhalb des Flüssigkeitsspiegels 1.8. Sie münden schließlich in eine Wasserstrahlgaspumpe 2.6, in die des weiteren ein Gasrohr 3 mündet. In der Wasserstrahlgaspumpe 2.6 werden Abwasser, Schlamm und Gas, beispielsweise Luft oder Sauerstoff, innigst vermischt und gemeinsam durch eine weitere Rohrleitung 2.7 nach unten bis unter den Siebboden 1.5 gepreßt, wo sie über ein Mündungsrohrstück 2.12 in den Behälter 1.0 gelangen. Das Mündungsrohrstück 2.12 befindet sich im Zentrum unterhalb des Strahlrohrs 1.2. Dadurch entsteht in diesem eine zentrale, aufwärts gerichtete Abwasser-Luft-Strömung, die eine Kreislaufströmung des Abwassers im Behälter 1.0 hervorruft, was durch Pfeile symbolisiert ist.

Die durch das Strahlrohr 1.2 aufsteigende Strömung bewirkt einen Mammutpumpeneffekt, der durch die trichterförmige Erweiterung des unteren Strahlrohrendes verstärkt wird und nicht nur Abwasser und Schlamm, sondern - falls vorhanden - auch Füllkörper 4 mit anhaftenden sessilen Mikroorganismen im Klärreaktor umwälzt. Da das Volumen der Füllkörper 4 bis zu 75 % des Behältervolumens ausmacht, befinden sich immer ausreichende Mengen von Füllkörpern 4 in Ruhe, so daß die den Klärvorgang bewirkenden Mikroorganismen ungestört wachsen können. Einer Verblockung der Füllkörper 4 wird dadurch vorgebeugt, daß immer genügend Füllkörper 4 auch in Bewegung gehalten werden.

Wie die Zeichnung zeigt, laufen die Rohrleitungen zu einem großen Teil im Inneren des Behältes 1.0, wo sie mit Hilfe von Streben 1.4 an der Behälterwand fixiert sind. Auch die Wasserstrahlgaspumpe 2.6 befindet sich im Inneren des Behältes 1.0, und zwar etwa in Höhe des maximalen Flüssigkeitsspiegels 1.8, wodurch ihr Wirkungsgrad unabhängig wird von dem jeweiligen Flüssigkeitsstand und insbesondere von der Höhe des Behälters 1.0. Nur dank dieser Position ist es möglich, Flüssigkeitshöhen von mehr als 8 Meter problemlos zu realisieren. In allen Fällen wird die totale homogene Durchmischung von Abwasser, Klärschlamm und Gas sichergestellt, die für die hervorrangende Klärwirkung verantwortlich ist.

Der Klärreaktor wird im sogenannten Batch-Betrieb gefahren. Ein Durchlaufbetrieb wäre aber auch möglich. Er wird hierzu zunächst mit dem zu klärenden Abwasser gefüllt. Daraufhin wird die Flüssigkeitspumpe 2.0 eingeschaltet, wodurch in der Wasserstrahlgaspumpe 2.6 eine sehr innige Durchmischung von Abwasser und Luft erfolgt und die Kreislaufströmung in Gang gesetzt wird. Dies wird solange fortgesetzt, bis die Mikroorganismen den gesamten organischen Fremdstoffanteil im Abwasser umgesetzt haben. Da der Luft- bzw. Sauerstoffbedarf von der organischen Belastung des Abwassers abhängt, besteht bei schwach belastetem Abwasser die Möglichkeit, die Flüssigkeitspumpe 2.0 zeitweise abzuschalten, oder drehzahlgeregelt zu betreiben, um Energie zu sparen. Dies wird erreicht mit Hilfe eines Sensors 5.1, der die Sauerstoff-Sättigung im Abwasser mißt und an eine elektronische Steuerung 5.0 meldet, die die Pumpe 2.0 ein- und ausschaltet bzw. herunterregelt.

Sobald alle organischen Bestandteile umgesetzt sind, wird die Flüssigkeitspumpe 2.0 abgeschaltet. Wasser und Klärschlamm trennen sich. Der Klärschlamm setzt sich unten ab. Das gereinigte Wasser wird über die Abläufe 2.18, 2.19, der Klärschlamm über den Auslaß 2.14 abgezogen. Anschließend wird der Klärreaktor wieder gefüllt und das Verfahren beginnt von neuem. Die Zyklusdauer lieft zwischen 10 und 12 Stunden, maximal 24 Stunden.

Versuche an der Staatlichen Landes-Lehr- und Forschungsanstalt in Neustadt/Weinstraße, Deutschland, von September bis Dezember 1993 haben gezeigt, daß es mit einem nur ca. 5 m³ großen Klärreaktor möglich ist, bei einer Begasung mit Luft eine Abbauleistung von ca. 1000 Einwohnergleichwerten zu erreichen, die bei einer Begasung mit Sauerstoff auf ca. 3000 Einwohnergleichwerte gesteigert werden kann. Je nach Art, Zusammensetzung und Konzentration des eingeleiteten Abwassers lag die Abbauleistung bei 90 - 99 % der BSBs-Eingangsbelastung. Diese Werte wurden bereits 2 - 3 Tage nach der Inbetriebnahme erreicht. Besonders hohe Abbauwerte (> 95 %) konnten gerade in kritischen Phasen mit hoher Abwasserbelastung (6000 - 8000 mg/I BSBs) erzielt werden. Selbst Stoßbelastungen (ca. 20 000 mg/I BSBs) durch Zufuhr von Mosttrub oder Hefe-haltigem Wasser konnten den biologischen Abbau nur unwesentlich bremsen. Die Ablaufwerte lagen stets unterhalb 700 mg/I BSBs, meist sogar unterhalb 350 mg/I BSBs, ohne daß die Bakteriennährstoffe Stickstoff und Phosphor zugegeben werden mußten. Die Behandlungsdauer für eine Charge lag regelmäßig unter 12 Stunden. Die pH-Werte des Abwassers änderten sich von 3 - 4 vor der Klärung auf 7 - 8 nach der Klärung. Damit ist die Gefahr der Beton-Korrosion in der Kanalisation beseitigt. Der gebildete Belebtschlamm roch stets angenehm erdig.

Auch der CSB-Abbau war hervorragend. CSB-Belastungen des ungeklärten Abwassers zwischen 10 000 mg/I und 30 000 mg/I wurden auf 200 - 300 mg/I reduziert. Dank dieser bisher einmaligen Eigenschaft der Erfindung eignet sie sich sogar zur Klärung der Sickerwässer von Abfall-Deponien, die wegen ihrer extrem hohen CSB-Belastung und schwer abbaubaren Abwasserinhaltsstoffen in herkömmlichen Kläranlagen nur nach einer chemischen Neutralisation und geeigneter Verdünnung bzw. anderen, zusätzlichen Maßnahmen verarbeitet werden können.

Dank der vorliegenden Erfindung ist es also möglich, auch große Belastungsspitzen aufzufangen, ohne daß wie bei den herkömmlichen Kläranlagen die Gefahr besteht, daß der Schlamm überlastet, aufgrund von 0₂-Mangel gestört bzw. entartet wird. Dabei genügt zur Steuerung des gesamten Klärreaktors eine einfache Schaltuhr; wenn der Wunsch besteht können aber auch Meßelektroden und Steuerelektroniken eingesetzt werden. Dadurch kann ein solcher Klärreaktor sehr preiswert angeboten und somit auch von Kleinbetrieben, beispielsweise Weinbaubetrieben, genutzt werden, die andernfalls gezwungen wären, die gesetzlich vorgeschriebene Geld-Abgabe an die kommunale Kläranlage zu bezahlen.

## Patentansprüche

1. Verfahren zum Klären von Abwässern nach dem aerob/fakultativen Prinzip, wobei das zu reinigende Abwasser in einem ersten Schritt intensiv mit sauerstoffhaltigem Gas, vorzugsweise Luft, gemischt und in einem Kreislauf gehalten wird, und wobei in einem zweiten Schritt gereinigtes Wasser und Klärschlamm getrennt werden, gekennzeichnet durch die Merkmale:
- zunächst wird der Behälter (1.0) eines Klärreaktors mit einer Charge des Abwassers gefüllt,
- anschließend wird im Behälter (1.0) während einer ersten Zeitspanne eine Kreisströmung erzeugt, indem
-- das Gemisch aus Abwasser und Gas über eine Rohrleitung (2.7, 2.12), die im Zentrum des Behälterbodens (1.1) mündet, in den Behälter (1.0) gepumpt wird,
-- Abwasser und Gas werden in einer Wasserstrahlgaspumpe (2.6) gemischt,
- anschließend setzt sich während einer zweiten Zeitspanne der Klärschlamm im ruhigen Behälter (1.0) ab,
- abschließend werden zunächst das gereinigte Wasser über wenigstens einen hochliegenden Ablauf (2.18, 2.19) und dann der Klärschlamm über einen tiefliegenden Ablauf (2.14) abgezogen,
- die Summe von erster und zweiter Zeitspanne beträgt 10 - 24, vorzugsweise 10 - 12 Stunden.

2. Klärreaktor nach dam aerob/fakultativen Prinzip zur Durchführung des Klärverfahrens gemäß Anspruch 1 oder zur Durchführung von Klärverfahren mit kontinuierlicher Beschickung mit Abwasser, umfassend
- einen zylindrischen, wenigstens teilweise thermisch isolierten Behälter (1.0)
-- mit trichterförmigem Boden (1.1),
-- mit gegebenenfalls abnehmbarem Deckel (1.7),
-- mit einem Zulauf (2.17) für das zu klärende Abwasser,
-- mit wenigstens einem Ablauf (2.18, 2.19) für das geklärte Wasser und
-- mit einem Ablauf (2.14) für den Klärschlamm,
- ein als Tauchrohr ausgebildetes Strahlrohr (1.2) im Zentrum des Behälters (1.0),
- und eine Belüftungs- und Umwälzeinrichtung, gebildet aus
-- einer Flüssigkeitspumpe (2.0),
-- einer Wasserstrahlgaspumpe (2.6),
-- einer Gasleitung (3) und
-- diese verbindende Rohrleitungen (2.1, 2.2, 2.4, 2.7. 2.12), gekennzeichnet durch die Merkmale:
- der Zulauf (2.17) befindet sich am oberen Rand des Behälters (1.0),
- der Ablauf (2.18, 2.19) für das geklärte Wasser befindet sich etwa auf halber Höhe des Behälters (1.0),
- im Boden (1.1) befindet sich ein Sieb (1.5),
- unter dem Sieb (1.5) ist eine Abzugkammer (1.6) vorgesehen,
- von der Abzugkammer (1.6) führt ein Rohrstück (2.13) zu dem Ablauf (2.14) für den Klärschlamm und zur flüssigkeitspumpe (2.0),
- von der Flüssigkeitspumpe (2.0) führen Rohre (2.1, 2.2, 2.4) zur Wasserstrahlgaspumpe (2.6),
- die Wasserstrahlgaspumpe (2.6) befindet sich etwa in Höhe des Abwasserspiegels,
- von der Wasserstrahlgaspumpe (2.6) führen weitere Rohre (2.7, 2.12) unter den Boden (1.1), wo sie unter dem Strahlrohr (1.2) in den Behälter (1.0) münden.

3. Klärreaktor nach Anspruch 2, gekennzeichnet durch die Merkmale:
- es sind zwei Abläufe (2.18, 2.19) für geklärtes Wasser vorgesehen,
-- der eine (2.19) liegt etwa bei einem Drittel,
-- der andere (2.18) bei etwa zwei Dritteln der Behälterhöhe.

4. Klärreaktor nach Anspruch 2 oder 3, gekennzeichnet durch das Merkmal:
- das Strahlrohr (1.2) ist unten etwa trichterförmig erweitert.

5. Klärreaktor nach Anspruch 2, 3 oder 4, gekennzeichnet durch das Merkmal:
- das Verhältnis Durchmesser:Höhe beträgt ca. 1:1 bis 1:2.

6. Klärreaktor nach einem der Ansprüche 2 bis 5, gekennzeichnet durch die Merkmale:
- es sind im Abwasser frei schwebende Füllkörper (4) als Aufwuchsfläche für sessile Mikroorganismen vorgesehen,
- das Volumen der Füllkörper (4) beträgt ca. 75 % des Behältervolumens.

7. Klärreaktor nach einem der Ansprüche 2 bis 6, gekennzeichnet durch das Merkmal:
- die Wasserstrahlgaspumpe (2.6) befindet sich im Inneren des Behälters (1.0).

8. Klärreaktor nach einem der Ansprüche 2 bis 7, gekennzeichnet durch das Merkmal:
- das Sieb (1.5) besitzt eine Maschenweite kleiner als die Füllkörper (4).

9. Klärreaktor nach einem der Ansprüche 2 bis 8, gekennzeichnet durch das Merkmal:
- ein Sensor (5.1) mißt die Sauerstoff-Konzentration in der Flüssigkeit.
